# FASCICULE DE BREVET EUROPEEN

(11) **EP 0 867 140 B1**
(45) Date de publication et mention de la délivrance du brevet: **14.05.2003**
(21) Numéro de dépôt: 98460004.9
(22) Date de dépôt: 17.03.1998
(51) Int. Cl.: A47J 27/20, A22C 7/00

(54) **Dispositif de pressage pour cadres empilables de moulage et de cuisson de produits alimentaires**
Pressanordnung für stapelbaren Rahmen zum Formen und Kochen von Nahrungsmitteln
Press arrangement for stackable frames for molding and cooking food stuff

(30) Priorité: 27.03.1997 FR 9704029; 26.11.1997 FR 9715120
(43) Date de publication de la demande: 30.09.1998
(73) Titulaire: ARMOR INOX SA, F-56430 Mauron (FR)
(72) Inventeur: Dreano, Claude, 56430 Mauron (FR)
(74) Mandataire: Maillet, Alain

(56) Documents cités:
- EP-A- 0 625 325
- EP-A- 0 638 270
- US-A- 3 750 563

## Description

La présente invention concerne un dispositif de pressage pour récipient empilable de moulage et de cuisson, notamment un récipient qui est destiné à contenir et à mouler des produits alimentaires à comprimer pendant leur cuisson, comme par exemple des jambons.

Dans le passé, pour fabriquer du jambon moulé, on utilisait des moules qui servaient au remplissage par des morceaux de viande, puis au désaérage, au pressage, et, enfin, à la cuisson du contenu. On a modernisé ces moules en leur donnant la forme de goulottes relativement longues, en assemblant parallèlement ces goulottes dans des cadres rigides dont la manipulation nécessite généralement l'emploi de chariot élévateur, en empilant ces cadres pour former des blocs que l'on fait entrer dans des enceintes où l'on fait circuler un fluide caloporteur pour la cuisson, puis éventuellement un fluide réfrigérant pour le refroidissement. L'opération de cuisson se termine par la sortie du bloc de l'enceinte, le désempilage et le démoulage des jambons.

Pour réaliser le pressage des jambons dans les goulottes d'un cadre, les fonds de celles-ci sont associés à des couvercles et à des systèmes de ressort qui servent à presser les jambons contenus dans les goulottes du cadre immédiatement situé dessous dans l'empilage.

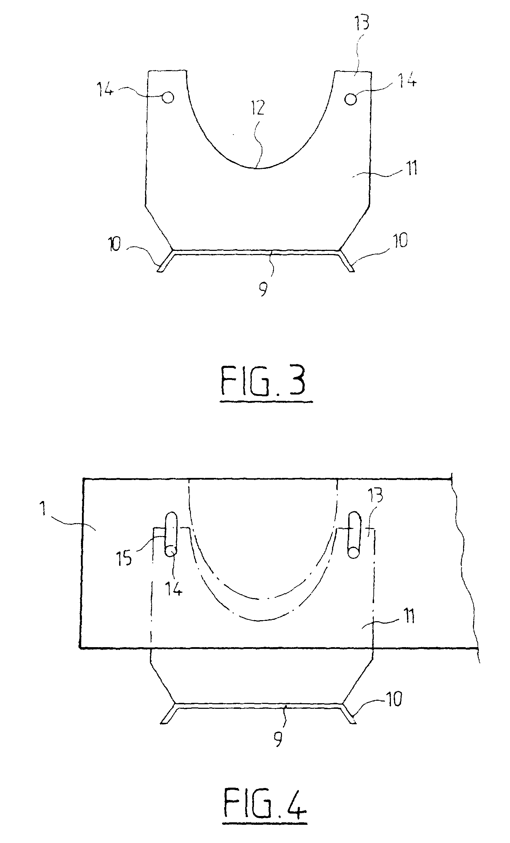

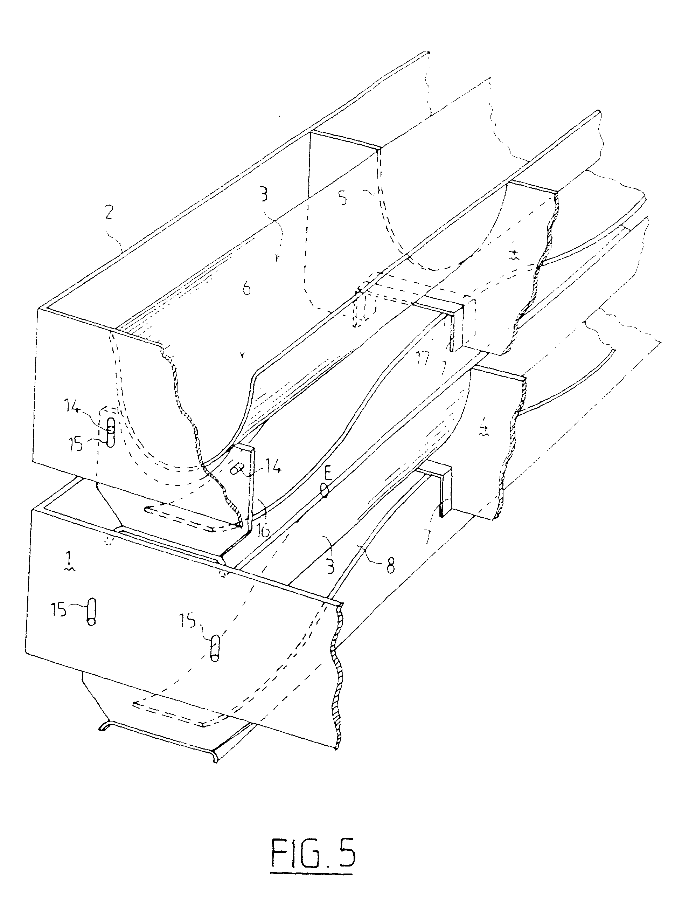

Les documents EP-A-0 292 417 et EP-A-0 638 270 concernent des ensembles empilables du type mentionné ci-dessus. Dans le document EP-A-0 292 417, il est décrit, en relation avec les Figs. 4 et 5, un ensemble empilable de cadres dans chacun desquels des goulottes de section rectangulaire comportent sous leurs fonds plans des plaques suspendues qui servent de couvercle pour les goulottes du cadre immédiatement inférieur dans l'empilage. Les plaques sont de dimensions légèrement inférieures à la section interne des goulottes. La distance verticale entre un couvercle et le fond de la goulotte associée est fixe. Comme mentionné dans ce document, en début de cuisson, les couvercles pénètrent moins dans les goulottes inférieures que ne l'indiquent les Figs. 4 et 5, puis, au cours de la cuisson, le pressage est assuré par gravité et par des moyens de traction accrochés, à l'extérieur des cadres, entre les barres horizontales de manipulation des cadres.

Dans le document EP-A-0 638 270, il est décrit un ensemble empilable de cadres dans chacun desquels les fonds des goulottes servent à presser par dessus les jambons contenus dans les goulottes du cadre immédiatement inférieur dans l'empilage. De plus, dans chaque goulotte, est prévu, au-dessus de son fond, un faux fond mobile sur lequel repose la partie inférieure du jambon à cuire. Entre le véritable fond et le faux fond, est prévu un moyen élastique qui repousse le faux fond vers le haut. Ainsi, au cours de la cuisson, le jambon est pressé entre, d'une part, le véritable fond de la goulotte supérieure par gravité et par moyens de traction accrochés à l'extérieur des cadres, entre les barres horizontales de manipulation des cadres, et, d'autre part, le faux fond repoussé vers le haut par ledit moyen élastique.

Les moyens prévus dans les deux documents ci-dessus donnent satisfaction quand on utilise des goulottes de section rectangulaires destinées à mouler des jambons de section rectangulaire, car les petits mouvements des goulottes ne donnent pas lieu à des coincements intempestifs. Les moyens à propriété élastique prévus dans le second document apportent notamment une amélioration supplémentaire dans le pressage du jambon, pendant sa cuisson, ce qui se traduit par un produit alimentaire de meilleure qualité.

Un objet de la présente invention consiste à prévoir un dispositif de pressage de récipient empilable de moulage et de cuisson de produits alimentaires, tels que des jambons, le récipient comprenant un cadre pourvu de goulottes longitudinales, des moyens associés respectivement à chaque goulotte étant prévus pour atteindre de meilleurs résultats que précédemment, notamment quand la section d'une goulotte est ovalisée, afin d'améliorer encore la qualité des produits alimentaires.

Le moulage et la cuisson de jambon à section ovalisée avaient déjà été envisagés dans le document EP-A-0 638 270, déjà cité, en relation avec la Fig. 5 de celui-ci. Le faux fond, au lieu d'être plan, avait la forme du fond d'une gouttière, concave vers le haut, avec des bords longitudinaux qui tombent et qui assurent un guidage à l'intérieur de la goulotte. Mais ce guidage peut manquer de fiabilité, par exemple si un morceau de jambon vient inopinément se loger entre un bord longitudinal et la paroi latérale de la goulotte.

Un autre objet de la présente invention consiste particulièrement à prévoir des moyens qui assurent mieux le guidage du mouvement vertical.

Suivant une caractéristique de l'invention, chaque cadre comporte une pluralité de goulottes fixes entre ses côtés transversaux constitués par des plaques verticales métalliques, au-dessous de chaque goulotte, étant suspendu, par l'intermédiaire des côtés transversaux respectifs, un couvercle qui est constitué par une plaque longitudinale et deux plaques verticales de bouts qui peuvent glisser contre les faces desdits côtés transversaux, chaque plaque de bout étant pourvue d'ergots longitudinaux qui sont dirigés vers le côté transversal correspondant du cadre et qui sont engagés dans des lumières étroites verticales prévues dans la plaque dudit côté transversal, un ressort étant disposé et comprimé entre ledit couvercle et le fond de la goulotte associée.

Suivant une autre caractéristique, dans chaque couvercle, la plaque longitudinale est légèrement plus courte que la distance entre deux côtés transversaux et les plaques de bout glissent, à l'intérieur, respectivement contre les faces des côtés transversaux, les ergots étant dirigés vers l'extérieur.

Suivant une autre caractéristique, dans chaque couvercle, la plaque longitudinale est légèrement plus longue que la distance entre deux côtés transversaux et les plaques de bout glissent, à l'extérieur, respectivement contre les plaques des côtés transversaux, les ergots étant dirigés vers l'intérieur.

Suivant une autre caratéristique, le ressort est constitué d'une lame de ressort.

Suivant une autre caractéristique, ladite lame de ressort en forme de sinusoïde comportant plusieurs ondulations, les positions des maximums correspondant respectivement à celles des entretoises.

Suivant une autre caractéristique, dans le cadre entre les côtés transversaux, sont prévues des entretoises sous forme de plaques qui sont solidaires des côtés longitudinaux du cadre et des fonds des goulottes, les bords inférieurs des plaques d'entretoises présentant une échancrure en face de chaque goulotte, la lame de ressort repose sur le fond de la goulotte par l'intermédiaire de ladite échancrure.

Suivant une autre caractéristique, chaque échancrure du bord inférieur d'une entretoise est munie de courtes plaquettes longitudinales qui forment un moyen de guidage et de centrage latéral du maximum de la lame en forme de sinusoïde.

Suivant une autre caractéristique, en face de chaque minimum par lequel la lame en forme de sinusoïde repose sur la plaque longitudinale du couvercle, est prévu un moyen de guidage et de centrage latéral de la lame, constitué par deux courtes plaquettes verticales encadrant la lame.

Suivant une autre caractéristique, le ressort est constituée d'un ressort hélicoïdal de compression reposant, par une première extrémité, sur la face supérieure dudit couvercle et appuyant, par sa seconde extrémité, sur le fond de la goulotte associée.

Suivant une autre caractéristique, sont montés, sur la face supérieure du couvercle, des taquets de manière à ce qu'ils délimitent entre eux un espace que l'extrémité inférieure du ressort peut circonscrire.

Les caractéristiques de la présente invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue partielle en plan d'un cadre suivant l'invention,
la Fig. 2 est une vue partielle en coupe longitudinale d'une goulotte latérale d'un cadre, suivant la ligne II-II de la Fig. 1,
la Fig. 3 est une vue de face d'un couvercle de goulotte, montré avant d'être suspendu à un cadre,
la Fig. 4 est une vue de face d'un côté transversal du cadre de la Fig. 1, montrant comment les couvercles sont suspendus à un cadre,
la Fig. 5 est une vue partielle en perspective de deux cadres empilés, suivant l'invention,
la Fig. 6 est une vue partielle en coupe longitudinale d'une goulotte latérale d'un cadre, suivant également la ligne II/II de la Fig.1, un ressort helicoïdal étant monté conformément à une variante de réalisation de l'invention, et
la Fig. 7 est une vue partielle en perspective de deux cadres empilés, selon une variante de réalisation de l'invention.

Dans la suite de la description, il faut toujours garder présent à l'esprit que l'objet de l'invention concerne des ensembles empilables de cadres.

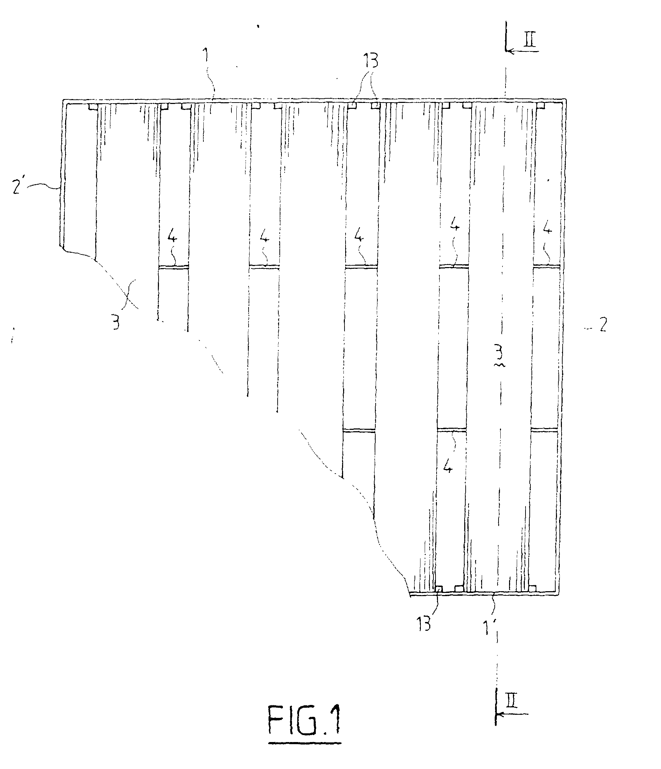

Le cadre rectangulaire, montré partiellement à la Fig. 1, comprend deux côtés transversaux 1 et 1', et deux côtés longitudinaux 2 et 2', chaque côté étant constitué par une plaque métallique. Entre les côtés transversaux 1 et 1', sont disposées, d'une manière fixe, plusieurs goulottes longitudinales 3, qui sont destinées à contenir des jambons. Dans la suite, on supposera que les fonds de ces goulottes 3 sont transversalement concaves pour les jambons ovalisés, mais il doit être entendu que l'invention s'applique aussi à des goulottes à fonds pratiquement plats.

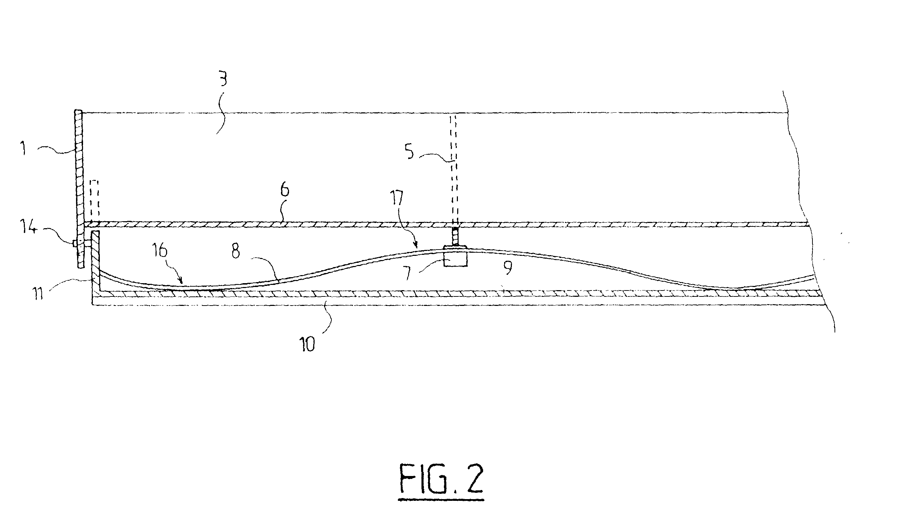

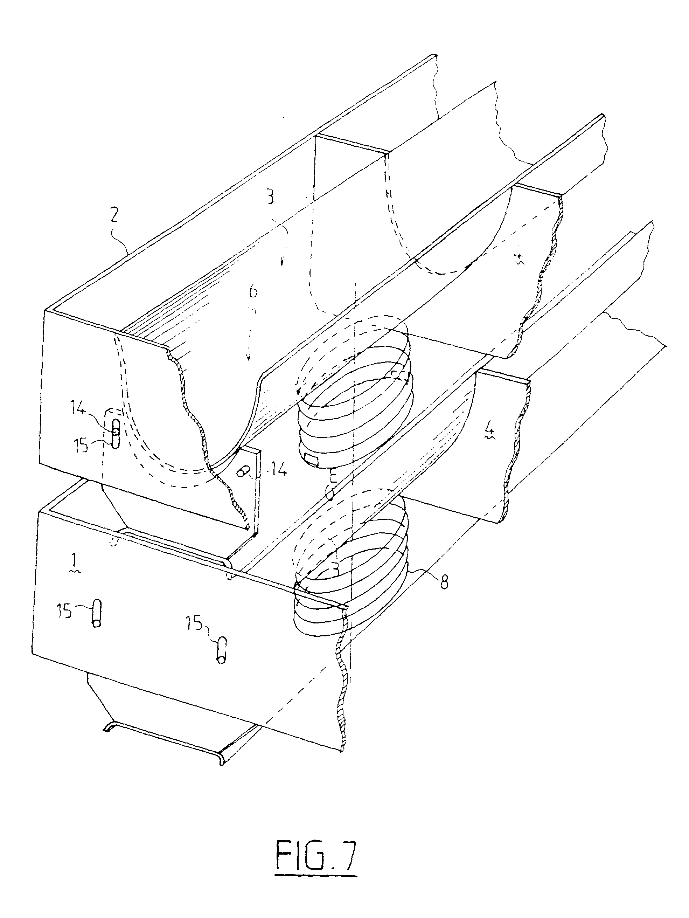

Comme le montrent les Figs. 1 et 2, ainsi que les Figs. 5 et 7 à intervalles réguliers entre les côtés 1 et 1', sont prévues, de manière fixe, des entretoises 4 formées chacune d'une plaque métallique, dont les bords supérieurs présentent des échancrures 5 qui épousent les fonds 6 des goulottes 3 et qui sont solidaires de ces fonds 6.

Comme le montre la Fig. 2, au-dessous du niveau le plus bas d'une goulotte 3, est prévue, entre les côtés 1 et 1' du cadre, sans en être solidaires, une plaque horizontale 9 qui est destinée à servir de couvercle pour la goulotte correspondante du cadre immédiatement inférieur dans un empilage. Les bords longitudinaux 10 de la plaque de couvercle 9 sont, de préférence, légèrement rabattus, la largeur hors tout de la plaque de couvercle 9 étant légèrement inférieure à la largeur interne de l'ouverture haute d'une goulotte 3, comme cela est visible en E à la Fig. 5.

A la Fig. 3 où l'on a supposé que la longueur de la plaque horizontale de couvercle 9 est inférieure à la distance entre les côtés transversaux d'un cadre, est montré un bout de la plaque 9 auquel est soudée perpendiculairement une petite plaque verticale de bout 11 dont le bord supérieur présente une échancrure 12, semblable à la section du fond d'une goulotte 3, qui comporte, de chaque côté de l'échancrure 12, deux cornes 13 qui se dressent verticalement et qui portent chacune un petit ergot horizontal 14, en saillie vers l'extérieur. L'échancrure 12 et le fond 6 d'une goulotte 3 sont de forme semblable mais ne sont pas solidaires l'un de l'autre.

La vue de la Fig. 4 montre que le côté transversal 1 du cadre comporte des lumières verticales 15 prévues pour recevoir chacune un ergot 14 d'une plaque de bout 11 de la plaque de couvercle 9. Chaque ergot 14 a une longueur suffisante pour traverser la plaque métallique d'un côté transversal du cadre, sans former de saillie externe. Ainsi, les lumières 15 servent de guide vertical pour les ergots 14. A l'autre bout du couvercle 9, est également prévue une autre plaque de bout 11, identique, dont les ergots 14 entrent dans des lumières 15 du côté 1' du cadre. La vue de la Fig. 4 montre également, en traits tirets, les positions relatives d'une goulotte 3 et du couvercle 9 qui y est suspendu par l'intermédiaire des côtés 1 et 1' du cadre.

Les mouvements verticaux de la plaque de couvercle 9 sont apparamment indépendants de ceux du cadre qui les porte, tout en étant bornés par les extrémités hautes et basses des lumières 14 qui limitent les mouvements des ergots 14.

En fait, entre le fond 6 d'une goulotte 3 et la plaque de couvercle 9, est prévue un ressort 8.

Dans un premier exemple de réalisation, le ressort 8 est constitué d'une lame qui a longitudinalement une forme de sinusoïde avec des minimums 16 qui appuient sur la face supérieure du couvercle 9 et des maximums 17 qui se logent respectivement dans des échancrures rectangulaires larges 7 que présentent les bords inférieurs des entretoises 4. Ces échancrures 7 sont, par exemple, munies de courtes plaquettes métalliques qui leur sont soudées perpendiculairement, dans le sens longitudinal. Ces échancrures 7 et leurs plaquettes chevauchent et guident latéralement, sans leur être fixées, les lames de ressorts 8. De plus, la lame de ressort 8 est maintenue toujours comprimée entre le couvercle 9 et les échancrures 7. Quand le ressort 8 est comprimé, les minimums 16 glissent librement sur le couvercle 9 tandis que les maximums 17 sont guidés latéralement sous les échancrures 7.

La vue en perspective de la Fig. 5, où deux cadres sont superposés, illustre les positions relatives des goulottes, des couvercles, des lames de ressort et des entretoises transversales, ce qui va permettre de comprendre le moulage du jambon au cours de sa cuisson dans une enceinte dans laquelle circule un fluide caloporteur, comme on l'a mentionné dans le préambule.

Au départ, pendant la manoeuvre d'empilage, dans chaque cadre seul, les goulottes sont pleines de jambon cru et portent des couvercles dont les ergots occupent une position basse dans les lumières 15 du fait des poussées des lames de ressort 8 sur les couvercles. Les ressorts 8 ne sont tendus que parce que les parties basses des lumières constituent des butées.

Quand les cadres sont empilés, d'une part, les goulottes pleines pèsent sur les ressorts 8, par l'intermédiaire des échancrures 7 des entretoises 4, ce qui comprime les ressorts 8, et, d'autre part, les cadres sont rapprochés par des moyens de traction extérieurs. Le cadre a tendance à descendre par rapport au couvercle 9, et les ergots 14 prennent des positions intermédiaires dans les lumières 15. On comprendra facilement comment ces positions intermédiaires évoluent au cours de la cuisson. A noter que l'échancrure 12 de la plaque de bout 11 sert généralement de butée pour le bout correspondant d'une goulotte 3, lequel est soudé à la plaque 1 ou 1'. En effet, comme on l'a déjà mentionné, l'échancrure 12 a une forme semblable à celle de la section du fond (6) de la goulotte.

Bien entendu, à la Fig, 2, la lame de ressort 8 a été présentée avec un minimum 16 proche de la plaque de bout 11 et un maximum 17 sous une échancrure 7 d'une entretoise 4, comme on l'a déjà dit ci-dessus, mais les positions des minima et des maxima peuvent être échangées sans sortir du cadre de l'invention, par en renversant la lame 8.

On notera que la lame de ressort 8 et le moyen de guidage de celle-ci dans l'échancrure 7 ne peuvent être atteints par des déchets de viande, donc que le guidage latéral est fiable. D'autre part, le lavage de chaque ensemble goulotte-couvercle-lame est facilité.

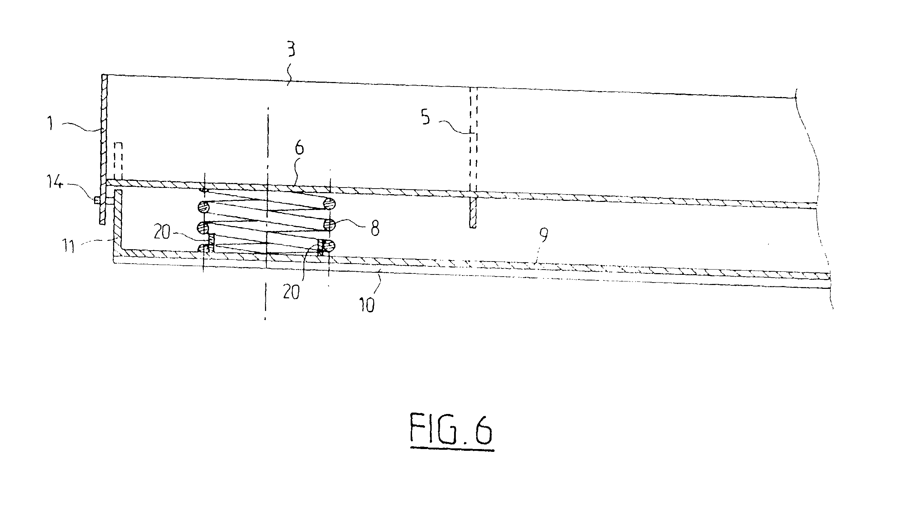

On a représenté aux Figs. 6 et 7 un autre mode de réalisation de l'invention selon lequel le ressort 8 n'est plus une lame de ressort mais un ressort hélicoïdal de compression. Sur ces Figs. 6 et 7, les mêmes éléments que ceux qui sont respectivement montrés aux Figs. 2 et 5 portent les mêmes références.

Comme cela est visible sur ces Figs. 6 et 7, un ressort hélicoïdal 8 de compression est monté à proximité de chaque extrémité 1 et 1' des goulottes 3. Chaque ressort 8 a son axe longitudinal perpendiculaire à l'axe longitudinal de la goulotte 3 et repose, par son extrémité inférieure, sur la face supérieure du couvercle 9 et appuie, par son extrémité supérieure, sur le fond 6 de la goulotte 3.

On notera qu'à l'instar du mode de réalisation précédent, chaque ressort 8 est comprimé au montage.

Pour éviter son glissement sur la face supérieure du couvercle 9, on a prévu des taquets 20 qui sont montés directement sur cette face 9 de manière à ce qu'ils délimitent entre eux un espace que l'extrémité inférieure du ressort 8 peut circonscrire. Par exemple, les taquets 20 sont au nombre de deux distants l'un de l'autre du diamètre interne de l'extrémité du ressort 8. De plus, l'axe qui joint ces deux taquets est sensiblement parallèle à celui de la goulotte 3.

On notera que, dans ce mode de réalisation, les entretoises 4 n'ont pas d'échancrures comme dans le mode précédent. Leur bord inférieur se trouve par exemple à la hauteur du fond des goulottes 3.

Le fonctionnement de ce mode de réalisation est sensiblement équivalent au mode précédent et ne sera donc pas de nouveau décrit.

De plus, on comprendra, par ces deux exemples de réalisation, que l'invention s'applique à toute forme de moyen susceptible d'exercer une force de rappel d'intensité suffisante entre la face supérieure 9 du couvercle et le fond de la goulotte 3.

On notera encore que, dans les deux modes de réalisation représentés, la longueur de la plaque de couvercle 9 peut être choisie légèrement supérieure à la distance entre les côtés transversaux, les plaques 11 étant situées à l'extérieur de ces côtés et les ergots étant tournés vers l'intérieur. Dans ce cas, il n'est pas nécessaire de prévoir une échancrure 12.

Egalement, en variante, le moyen de guidage latéral de la lame de ressort 8 peut être prévu autour des minimums 16 sur le couvercle 9, au lieu d'être situé sous une échancrure 7 d'une entretoise 4. Le moyen de guidage peut alors être, à chaque fois, constitué par deux courtes plaquettes verticales, soudées sur le couvercle 9 et encadrant un minimum 16. On peut aussi prévoir les deux types de moyen de guidage latéral.

## Revendications

1. Ensemble constitué d'un cadre empilable de moulage et de cuisson de produits alimentaires comportant un dispositif de pressage, le cadre comportant deux côtés longitudinaux (2, 2') et deux côtés transversaux (1, 1') et un certain nombre de goulottes fixes (3) entre ses côtés transversaux (1, 1') constitués par des plaques métalliques, **caractérisé en ce que**, au-dessous de la goulotte (3), est suspendu, par l'intermédiaire des côtés transversaux respectifs (1, 1'), un couvercle (9) qui est constitué par une plaque longitudinale et deux plaques de bouts (11) qui peuvent glisser contre les faces desdits côtés transversaux, chaque plaque de bout (11) étant pourvue d'ergots longitudinaux (14) qui sont dirigés vers le cadre et qui sont engagés dans des lumières étroites verticales (15) prévues dans les plaques desdits côtés transversaux, un ressort (8) étant disposé et comprimé entre ledit couvercle (9) et le fond (6) de la goulotte associée (3).

2. Ensemble suivant la revendication 1, **caractérisé en ce que**, le couvercle (9), comporte une plaque longitudinale qui est légèrement plus courte que la distance entre deux côtés transversaux (1, 1') et les plaques de bout (11) glissent, à l'intérieur, respectivement contre les faces des côtés transversaux, les ergots (14) étant dirigés vers l'extérieur.

3. Ensemble suivant la revendication 1, **caractérisé en ce que**, le couvercle (9), comporte une plaque longitudinale qui est légèrement plus longue que la distance entre deux côtés transversaux (1, 1') et les plaques de bout glissent, à l'extérieur, respectivement contre les plaques des côtés transversaux, les ergots (14) étant dirigés vers l'intérieur.

4. Ensemble suivant l'une des revendications 1 à 3, **caractérisé en ce que** le ressort 8 est constitué d'une lame du ressort.

5. Ensemble suivant la revendication 4, **caractérisé en ce que** ladite lame de ressort (8) est en forme de sinusoïde à plusieurs ondulations comportant des positions maximums et minimums, les positions des maximums (17) correspondant respectivement à la position d'entretoises (4) solidaires des côtés longitudinaux (2, 2') du cadre et des fonds des goulottes.

6. Ensemble suivant la revendication 5, **caractérisé en ce que**, dans le cadre entre les côtés transversaux (1, 1'), sont prévues des entretoises (4) sous forme de plaques, les bords inférieurs des plaques d'entretoises présentant une échancrure (7) en face de chaque goulotte (3), la lame de ressort (8) reposant sur le fond (6) de la goulotte (3) par l'intermédiaire de ladite échancrure (7).

7. Ensemble suivant la revendications 6, **caractérisé en ce que** chaque échancrure (7) du bord inférieur d'une entretoise (4) est munie de courtes plaquettes longitudinales qui forment un moyen de guidage et de centrage latéral du maximum de la lame (8) en forme de sinusoïde.

8. Ensemble suivant l'une des revendications 4 à 7, **caractérisé en ce que**, en face de chaque minimum (16) par lequel la lame (8) en forme de sinusoïde repose sur la plaque longitudinale du couvercle (9), est prévu un moyen de guidage et de centrage latéral de la lame (8), constitué par deux courtes plaquettes verticales encadrant la lame (8).

9. Ensemble suivant l'une des revendications 1 à 3, **caractérisé en ce que** le ressort (8) est constituée d'un ressort hélicoïdal de compression reposant, par une première extrémité, sur la face supérieure (9) dudit couvercle et appuyant, par sa seconde extrémité, sur le fond (6) de la goulotte (3) associée.

10. Ensemble suivant la revendication 9, **caractérisé en ce que** sont montés, sur la face supérieure du couvercle (9), des taquets (20) de manière à ce qu'ils délimitent entre eux un espace que l'extrémité inférieure du ressort (8) peut circonscrire.

## Patentansprüche

1. Anordnung, bestehend aus einem stapelbaren Rahmen zum Formen und Kochen von Nahrungsmitteln, umfassend eine Pressvorrichtung, wobei der Rahmen zwei Längsseiten (2, 2') und zwei Querseiten (1, 1') und eine gewisse Anzahl ortsfester Rinnen zwischen seinen Querseiten (1, 1'), die aus Metallplatten bestehen, umfasst, **dadurch gekennzeichnet, dass** unterhalb der Rinne (3) über jeweilige Querseiten (1, 1') ein Deckel (9) aufgehängt ist, der aus einer Längsplatte und zwei Endplatten (11) besteht, die an den Seitenflächen der Querseiten verschiebbar sind, wobei jede Endplatte (11) mit Längsnocken (14) versehen ist, die auf den Rahmen gerichtet sind und mit senkrechten, schmalen Langlöchern (15) in Eingriff stehen, die in den Platten der Querseiten bereitgestellt sind, wobei eine Feder (8) zwischen dem Deckel (9) und dem Boden (6) der dazugehörigen Rinne (3) angeordnet und zusammengedrückt ist.

2. Anordnung nach Anspruch 1, **dadurch gekennzeichnet, dass** der Deckel (9) eine Längsplatte umfasst, die etwas kürzer ist als der Abstand zwischen zwei Querseiten (1, 1'), und die Endplatten (11) innen jeweils an den Seitenflächen der Querseiten verschoben werden, wobei die Nocken (14) nach außen gerichtet sind.

3. Anordnung nach Anspruch 1, **dadurch gekennzeichnet, dass** der Deckel (9) eine Längsplatte umfasst, die etwas länger ist als der Abstand zwischen zwei Qüerseiten (1, 1'), und die Endplatten außen jeweils an den Platten der Querseiten verschoben werden, wobei die Nocken (14) nach innen gerichtet sind.

4. Anordnung nach einem der Ansprüche 1 bis 3, **dadurch gekennzeichnet, dass** die Feder (8) aus einem Federblatt besteht.

5. Anordnung nach Anspruch 4, **dadurch gekennzeichnet, dass** das Federblatt (8) die Form einer Sinuskurve mit mehreren Wellen aufweist, die Höchst- und Mindeststellungen umfasst, wobei die Höchststellungen (17) jeweils der Stellung von Stegen (4) entspricht, die mit den Längsseiten (2, 2') des Rahmens und den Rinnenböden einstückig sind.

6. Anordnung nach Anspruch 5, **dadurch gekennzeichnet, dass** in dem Rahmen zwischen den Querseiten (1, 1') plattenförmige Stege (4) bereitgestellt sind, wobei die unteren Ränder der Stegplatten jeder Rinne (3) gegenüber liegend einen bogenförmigen Ausschnitt (7) aufweisen, wobei das Federblatt (8) über den bogenförmigen Ausschnitt (7) auf dem Boden (6) der Rinne (3) aufliegt.

7. Anordnung nach Anspruch 6, **dadurch gekennzeichnet, dass** jeder bogenförmige Ausschnitt (7) des unteren Rands eines Stegs (4) mit kurzen Längsplättchen versehen ist, die ein Mittel zur Führung und seitlichen Zentrierung der Höchststellung des sinuskurvenförmigen Blatts (8) bilden.

8. Anordnung nach einem der Ansprüche 4 bis 7, **dadurch gekennzeichnet, dass** jeder Mindeststellung (16) gegenüber liegend, über die das sinuskurvenförmige Blatt (8) auf der Längsplatte des Deckels (9) aufliegt, ein Mittel zur Führung und seitlichen Zentrierung des Blatts (8) bereitgestellt ist, das aus zwei kurzen, senkrechten Plättchen besteht, die das Blatt (8) einrahmen.

9. Anordnung nach einem der Ansprüche 1 bis 3, **dadurch gekennzeichnet, dass** die Feder (8) aus einer schraubenförmigen Druckfeder besteht, die mit einem ersten Ende auf der oberen Seitenfläche (9) des Deckels aufliegt und mit ihrem zweiten Ende auf den Boden (6) der dazugehörigen Rinne (3) drückt.

10. Anordnung nach Anspruch 9, **dadurch gekennzeichnet, dass** auf der oberen Seitenfläche des Deckels (9) derart Mitnehmer (20) angebracht sind, dass sie untereinander einen Raum abgrenzen, den das untere Ende der Feder (8) umschreiben kann.

## Claims

1. An assembly made up of a stacking frame for the moulding and cooking of foodstuffs consisting of a pressing device, the frame including two longitudinal sides (2, 2') and two transverse sides (1, 1') and a certain number of fixed chutes (3) between these transverse sides (1, 1') made up of metallic plates, **characterised in that**, above the chute (3) a cover (9) is suspended by means of the transverse sides (1, 1'), which consists of a longitudinal plate and two end plates (11), which can slide against the surfaces of the said transverse sides, each end plate (11) being fitted with longitudinal pins (14), which point in the direction of the frame and which engage in the narrow vertical holes (15) set in the plates of the said transverse sides, a spring being sited and compressed between the said cover (9) and the base of the associated chute (3).

2. An assembly in accordance with claim 1, **characterised in that** the cover (9) consists of a longitudinal plate which is slightly shorter than the distance between the two transverse sides (1, 1') and the end plates (11) slide in the interior against the surfaces of the transverse sides respectively, the pins (14) pointing towards the outside.

3. An assembly in accordance with claim 1, **characterised in that** the cover (9) consists of a longitudinal plate, which is slightly longer than the distance between the two transverse sides (1, 1') and the end plates slide on the outside against the plates of the transverse sides respectively, the pins (14) pointing inwards.

4. An assembly according to one of claims 1 to 3, **characterised in that** the spring 8 is made of a spring blade.

5. An assembly according to claim 4, **characterised in that** the said spring blade (8) is sinusoidal in shape with several undulations consisting of maximum and minimum positions, the maximum positions (17) corresponding to the attached "tie beam" position (4) of the longitudinal sides (2, 2') of the frame and the bases of the chutes respectively.

6. An assembly in accordance with claim 5, **characterised in that** tie-beams in the form of plates are envisaged within the frame between the transverse sides (1, 1'), the lower edges of the tie-beam plates having an indentation (7) opposite each chute (3), the spring blade (8) resting on the base (6) of the chute (3) by means of the said indentation (7).

7. An assembly in accordance with claim 6, **characterised in that** each indentation (7) of the lower edge of a tie-beam (4) is fitted with short longitudinal small plates, which act as a means of guiding and maximum lateral centring of the blade (8) in the shape of a sinusoid.

8. An assembly in accordance with one of claims 4 to 7, **characterised in that**, opposite each minimum (16) by which blade (8), in the shape of a sinusoid, rests on the longitudinal plate of the cover (9), is fitted the means of guiding and lateral centring of the blade (8) by means of two short vertical small plates surrounding the blade (8).

9. An assembly in accordance with claims 1 to 3, **characterised in that** the spring (8) is made of a helicoidal compression spring resting, by its first extremity, on the upper side (9) of the said cover and resting, by its second extremity, on the base (6) of the associated chute (3).

10. An assembly in accordance with claim 9, **characterised in that** pegs (20) are mounted on the upper side of the cover (9) such that they define between them a space that the lower extremity of the spring (8) can circumscribe.
